# EUROPÄISCHE PATENTSCHRIFT

(11) **EP 0 642 631 B1**
(45) Veröffentlichungstag und Bekanntmachung des Hinweises auf die Patenterteilung: **21.08.1996**
(21) Anmeldenummer: 93909993.3
(22) Anmeldetag: 14.05.1993
(51) Int. Cl.: F16D 43/206

(54) **SPIELFREIE MECHANISCHE ÜBERLASTKUPPLUNG**
BACKLASH-FREE MECHANICAL OVERLOAD CLUTCH
ACCOUPLEMENT MECANIQUE DE SURCHARGE SANS JEU

(30) Priorität: 14.05.1992 DE 4215853; 27.11.1992 DE 9216184 U
(43) Veröffentlichungstag der Anmeldung: 15.03.1995
(73) Patentinhaber: Chr. Mayr GmbH & Co. KG, W-87665 Mauerstetten (DE)
(72) Erfinder: KLINGLER, Günther, D-8939 Oberostendorf (DE); DROPMANN, Christoph, D-8950 Kaufbeuren (DE); EISENBURGER, Josef, D-8939 Türkheim (DE)
(74) Vertreter: Ruschke, Hans Edvard, Dipl.-Ing. Patentanwälte
(86) Internationale Anmeldenummer: EP9301211
(87) Internationale Veröffentlichungsnummer: WO9323686

(56) Entgegenhaltungen:
- DE-A- 1 937 228
- DE-A- 4 005 986
- FR-A- 2 171 576
- GB-A- 2 071 236
- US-A- 3 584 715
- US-A- 3 650 362
- US-A- 4 232 772
- US-A- 4 293 060

## Beschreibung

Die vorliegende Erfindung betrifft eine spielfreie mechanische Überlastkupplung nach dem Oberbegriff des Patentanspruches 1. Eine solche Kupplung ist z.B. aus der DE-PS 30 09 224 C2 von Giurguis bekannt.

Es gibt im Stand der Technik spielfreie mechanische Überlastkupplungen, bei denen das Grenzdrehmoment durch die einstellbare Andruckkraft einer Federanordnung veränderbar ist. Um bei fehlender Zugriffsmöglichkeit zu einer solchen, in eine zu schützende Vorrichtung eingebauten Überlastkupplung das Grenzdrehmoment dennoch verändern zu können, ist es bereits bekannt, an Stelle der Federanordnung einen Elektromagneten vorzusehen, damit das Grenzdrehmoment auch dann stufenlos einstellbar bleibt.

Spielfreie Überlastkupplungen nach dem Stand der Technik sind insbesondere im Hinblick auf das sogenannte Durchrasten bei Auftreten einer Überlast empfindlich, weil die dadurch zwangsläufig entstehende Abnutzung der Kupplung zu dem Verlust der Spielfreiheit und zum Absinken des eingestellten Grenzdrehmomentes führen kann.

Hiernach ist es die der vorliegenden Erfindung zugrundeliegende Aufgabe, eine spielfreie Überlastkupplung in der Weise weiterzubilden, daß sie nach dem Erreichen des Grenzdrehmomentes bzw. nach dem Ausrasten in freigeschalteter Stellung verbleibt ohne durchzurasten.

Diese Aufgabe wird erfindungsgemäß durch die Merkmale des Anspruches 1 gelöst, wobei es je nach Anwendungsfall vorteilhaft sein kann, den Magneten als Permanent- oder als Elektromagneten auszubilden. Aufgrund der Magnetkraft wird die Kupplung nach dem Ausrasten in der ausgerasteten Stellung gehalten werden, d.h. sie kann bei hohen Drehzahlen, z.B. über 3000 U/min. eingesetzt werden. Es entsteht kein Verschleiß an der Senkungsgeometrie bzw. an den einander gegenüberstehenden Ausnehmungen in den zwei Kupplungshälften, in die die Mitnehmerkörper in Gestalt der Kugeln gemeinsam eingedrückt werden. Ein weiterer Vorteil der erfindungsgemäßen Lösung besteht darin, daß keine kurzzeitigen Drehmomentspitzen beim Durchrasten der Kugeln entstehen.

Wenn der Magnet als Elektromagnet ausgebildet ist, wird die Überlastkupplung und deren elektrische Schaltung besonders einfach, wenn der Elektromagnet während des Betriebes im eingerasteten Zustand dauernd schwach bestromt wird, so daß die Magnetkraft einerseits nicht ausreicht, um über den Luftspalt hinweg die Ankerscheibe und damit die Drehmoment-übertragungskörper entgegen der Federkraft anzuziehen. Kommt es zu einem Ausrasten und damit zu einer mechanischen Verschiebung der Drehmomentübertragungskörper bzw. der Ankerscheibe und somit zu einer Verkleinerung bzw. einem Verschwinden des Luftspaltes zwischen dem Elektromagneten und der Ankerscheibe, dann reicht andererseits die Magnetkraft doch aus, um die Kupplung in der ausgerasteten Stellung zu halten und sie somit freizuschalten. Zum Wiedereinrasten der Kupplung ist es dann lediglich notwendig, die Stromzufuhr zum Elektromagneten kurzzeitig zu unterbrechen. Wenn der Magnet als Permanentmagnet ausgebildet ist, kann es vorteilhaft sein, in seiner Nähe einen Elektromagneten anzuordnen, der zum Wiedereinrasten der Kupplung entgegengesetzt zum Permanenrmagneten magnetisiert wird.

Aus Gründen der Energieeinsparung und im Interesse eines höheren Grenzdrehmomentes ein und derselben Kupplung kann es vorteilhaft sein, den Magneten als Elektromagneten auszubilden und diesen erst aufgrund einer von einem an der Kupplung vorgesehenen Fühler abgefühlten Ausrastung der Überlasrkupplung mit Strom zu versorgen.

Die US-PS 4 232 772 zeigt eine mechanische Kupplung mit einem treibenden und einem getriebenen Kupplungskörper, die um diesselbe Achse drehbar angeordnet sind und die miteinander in drehmomentübertragbarer Weise verbunden sind durch je eine radial gerichtete Verzahnung, die miteinander in drehmomentübertragendem Eingriff stehen und von einer Federanordnung eingedrückt werden, wobei ein stationärer Elektromagnet vorgesehen ist, der zum Ausrasten der Kupplung die drehmomentübertragenden Teile ausrückt und in ausgerückter Stellung hält.

Die FR-PS 2 171 576 betrifft eine Überlastkupplung, mit je einem treibenden und einem getriebenen Kupplungskörper, die um diesselbe Achse drehbar angeordnet sind und die miteinander in drehmomentübertragender Weise verbunden sind durch Drehmoment-Übertragungskörper, die in Ausnehmungen der Kupplungskörper eingedrückt werden, mit mehreren in einem Kreis angeordneten Permanentmagneten, die nach dem Ausrasten der Kupplung den einen Kupplungskörper anziehen und so die Drehmoment-Übertragungskörper aus dem Eingriff in den Ausnehmungen heraushalten.

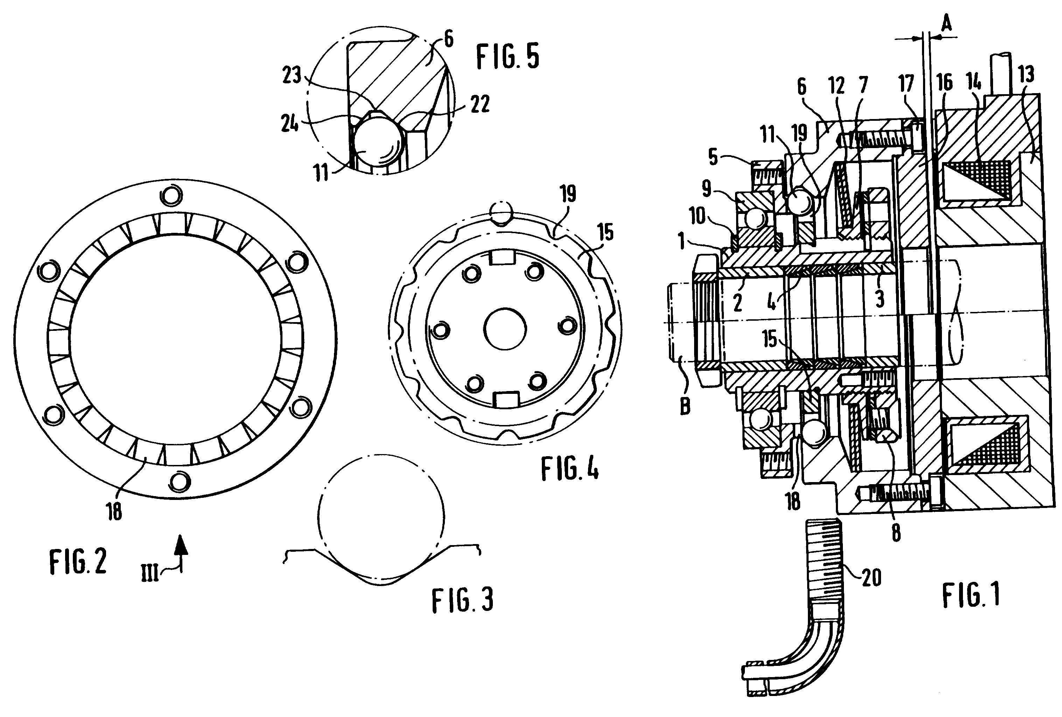

Ein Ausführungsbeispiel der vorliegenden Erfindung wird unter Bezugnahme auf die beigefügten Zeichnungen beschrieben. Darin zeigt:
- Fig. 1: einen Schnitt durch eine Ausführungsform dieser Überlastkupplung, wobei die Kupplung oberhalb der Mittellinie eingerastet und unterhalb der Mittellinie ausgerastet dargestellt ist;
- Fig. 2: eine Seitenansicht von rechts vom Druck- oder Abtriebsflansch 5, wobei mit 18 eine der axial ausgerichteten und auf einer Stirnfläche desselben kreisförmig verteilten Ausnehmungen zur Aufnahme der Drehmomentübertragungskörper in Gestalt der Kugeln 11 angezeigt wird;
- Fig. 3: eine vergrößerte Darstellung der Senkungsgeometrie der axialen Ausnehmungen 18 gemäß Blickrichtung X in Fig. 2;
- Fig. 4: eine Seitenansicht von rechts von der Nabe 1 mit dem Antriebsflansch 15 und den radialen Ausnehmungen 19 am Umfang,
- Fig. 5: eine vergrößerte Darstellung des äußeren Schaltteils oder Druckringes 6, welcher die Drehmoment-übertragungskörper in Gestalt der Kugeln 11 zugleich in die axialen Ausnehmungen 18 und die radialen Ausnehmungen 19 eindrückt; und
- Fig. 6: eine weitere Ausführungsform der erfindungsgemäßen Kupplung.
Bei der Ausführungsform der Fig. 1 handelt es sich um eine mechanische Überlastkupplung, welche bei einem bestimmten eingestellten Drehmoment ausrastet und einen Axialhub ausführt. Dabei würde sie wie eine Durchrastkupplung arbeiten, welche sofort wieder einzurasten versucht, wenn nicht der magnetische Schaltmechanismus in Gestalt des Elektromagneten 13, 14 oder eines an seiner Stelle vorhandenen Permanentmagneten und der damit zusammenwirkenden Ankerscheibe 16 vorhanden wäre, die mit dem Druckring 6 verbunden ist und im eingerasteten Zustand der Kupplung um einen Luftspalt A vom Magnetgehäuse entfernt ist. Durch den magnetischen Schaltmechanismus wird die Kupplung im ausgerasteten Zustand gehalten und es findet kein Durchrastvorgang statt, weil der Magnet entweder als Permanentmagnet dauernd wirkt oder als Elektromagnet zu Beginn des Ausrastvorganges aufgrund eines Signals vom Fühler 20 aktiviert wird. Bei sehr hohen Drehzahlen würde das Durchrasten bei Überlast die Kupplung sehr stark verschleißen und es würden außerdem starke Drehmomentspitzen auftreten. Sobald die Kupplung ausgerastet ist, wird sie also durch den Magneten im ausgerasteten Zustand gehalten und erst bei Wegnahme der Spannung des Elektromagneten rastet die Kupplung wieder ein. Beim Ausrastvorgang kann die Axialbewegung über einen Endschalter oder Fühler 20 abgegriffen und zugleich Spannung auf den Elektromagnet gegeben werden, damit die Kupplung im ausgerasteten Zustand gehalten wird, falls kein Permanentmagnet Anwendung findet.

Das Drehmoment wird über die zentrale Welle B und die darauf angeordneten Spannelemente 2, 3 und 4 auf die Nabe 1 bzw. den damit fest verbundenen Antriebsflansch 15 und über die Kugeln 11 auf den Druck- oder Abtriebsflansch 5 übertragen. An dem Flansch 5 kann dann ein beliebiges Abtriebselement angeflanscht werden. Die Drehmomenteinstellung erfolgt über die Nachstellmutter 8, welche die Tellerfedern 12 mit einer Axialkraft beaufschlagt und über den Druckring 6 die Kugeln 11 in die axialen Senkungen 18 des Druckflansches 5 und zugleich in die radialen Senkungen 19 am Umfang des Antriebsflansches 15 der Nabe 1 drückt. Wird nun ein bestimmtes eingestelltes Drehmoment überschritten, wandern die Kugeln 11 in Fig. 1 axial nach rechts und drücken den Druckring 6, welcher über Schrauben 17 mit einer Ankerscheibe 16 verbunden ist, nach rechts in die ausgerastete Position gemäß der unteren Hälfte der Fig. 1. Der entweder dauernd wirkende Permanentmagnet oder die erst zu diesem Zeitpunkt aktivierte Elektromagnetspule 14, welche in dem Spulenträger 13 eingebaut ist, erzeugt ein Magnetfeld, welches die Ankerscheibe 16 durchflutet und dadurch den Druckring 6 in der ausgerasteten Stellung hält. Dadurch kann der Druck- oder Abtriebsflansch 5 mit dem angeflanschten Abtriebselement frei auslaufen, ohne daß die Kupplung durch-rastet und verschleißt.

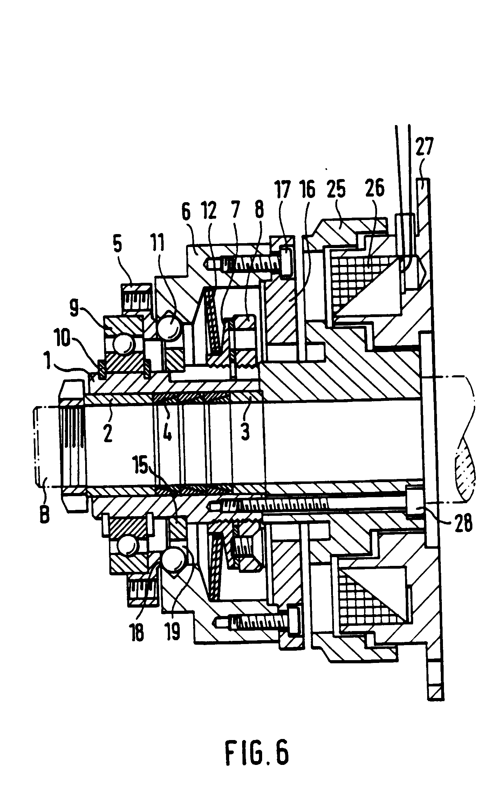

Die Fig. 5 zeigt die besondere Ausbildung des Druckringes 6 im Bereich des an den Drehmomentübertragungskörpern in Gestalt der Kugeln 11 angreifenden Teils desselben: Die auf einem Kreis um die zentrale Welle B angeordneten Kugeln 11 liegen in der eingerasteten Stellung der oberen Hälfte der Fig. 1 sowohl in den radialen Ausnehmungen 19 des Antriebsflansches 15 als auch in den axialen Ausnehmungen 18 des Druck- bzw. Abtriebsflansches 5. Dabei werden die Kugeln 11 durch die rechte Schrägfläche 22 der im Schnitt (Fig. 5) keilförmigen Ringnut 23 des Druckringes 6 in beide Ausnehmungen 18, 19 zugleich eingedrückt, so daß die Kupplung das Drehmoment spielfrei übertragen kann. Beim Ausrasten der Kupplung wandern die Kugeln 11 in axialer Richtung und treten aus den axialen Ausnehmungen 18 heraus, verbleiben aber nach rechts versetzt (untere Hälfte der Fig. 1) innerhalb der radialen Ausnehmungen 19 des Antriebsflansches 15. Für die Dauer der Bestromung des Elektromagneten 13, 14 und der damit einhergehenden Haltekraft desselben wird die Ankerscheibe 16 und somit auch der damit verbundene Druckring 6 in der freigeschalteten Stellung der unteren Hälfte der Fig. 1 gehalten. Dabei sorgt die in Fig. 5 linke Schrägfläche 24 der keilförmigen Ringnut 23 im Druckring 6 dafür, daß die vom Druck der Tellerfedern 12 entlasteten Kugeln 11 für die Dauer des freigeschalteten Zustandes nicht in die axialen Ausnehmungen 18 zurückwandern. Die rechte Schrägfläche 22 verläuft in etwa senkrecht zur kegeligen Trennfuge zwischen den beiden Ausnehmungsreihen 18, 19 und die Schrägfläche 24 verläuft in etwa parallel dazu.

Durch den magnetischen Freischaltmechanismus, welcher den Druckring 6 gegen den Federdruck 12 in der ausgerasteten Stellung hält, werden das Durchrasten und damit einhergehend die Drehmomentspitzen verhindert. Durch die spezielle Ausbildung des Druckringes 6, also durch seine Verbindung mit der Ankerscheibe 16 und deren Zusammenwirken mit dem Elektromagneten 13, 14, werden die Kugeln 11 in der ausgerasteten Stellung gehalten und der Druckflansch 5 mit den Axialsenkungen kann frei umlaufen, ohne daß die Kugeln axial an den Senkungen oder Ausnehmungen 18 anschlagen.

Soweit als Magnet ein Permanentmagnet zur Anwendung kommt, der nach dem axialen Ausrasten die Ankerscheibe 16 dauernd in der Freischaltstellung hält, kann das Wiedereinrasten der Kupplung entweder mechanisch erfolgen, indem die Ankerscheibe entgegen der dauernd wirkenden Magnetkraft vom Magnetgehäuse 13 abgezogen wird, oder die Kraft des Permanentmagneten, der in Fig. 1 oder 6 im Bereich der Spule 14 bzw. 26 anzuordnen wäre, würde durch einen kurzzeitig zu aktivierenden, magnetisch entgegengesetzt wirkenden Elektromagneten wie bei 14 bzw. 26 wieder aufgehoben.

Die Ausführungsform der Fig. 6 unterscheidet sich von derjenigen der Fig. 1 im wesentlichen dadurch, daß axial zwischen der Ankerscheibe 16 und dem Magnet gehäuse 27 mit der Spule 26 und/oder dem Permanentmagneten darin ein Rotor 25 vorgesehen ist, der über eine Anzahl von Zylinderschrauben 28 mit der Nabe 1 verschraubt und damit mit der Welle B verbunden ist. Dadurch ergibt sich der Vorteil, daß bei nach dem Ausrasten der Kupplung bei weiter durchdrehender Welle B keine Relativbewegung zwischen den Drehmomentübertragungs-körpern in Gestalt der Kugeln 11 und dem Druckring 6 erfolgt. Diese Ausgestaltung der Kupplung trägt also zur Steigerung der Lebensdauer der Kupplung bei.

Weder in der Ausführungsform der Fig. 1 noch derjenigen der Fig. 6 ist der möglicherweise vorhandene Permanentmagnet zeichnerisch dargestellt. Allerdings wäre er etwa im Bereich der Spule 14 bzw. 26 oder einem Teil davon angeordnet, wobei die gegebenenfalls zusätzlich vorhandene Elektromagnetspule zur Aufhebung der Wirkung des Permanentmagneten ebenfalls an dieser Stelle angeordnet wäre.

### Bezugszeichenliste

- 1: Nabe
- 2: Spannhülse
- 3: Druckhülse
- 4: Spönnelemente
- 5: Druckflansch/Abtriebsflmsch
- 6: Druckring - außen
- 7: Druckring - innen
- 8: Nachstellmutter für Grenz-Drehmomente
- 9: Wälzlager
- 10: Sicherungsring
- 11: Kugeln (Drehmoment-Übertragungskörper)
- 12: Tellerfedern
- 13: Spulenträger/Magnetgehäuse
- 14: Elektromagnetspule
- 15: Antriebs flansch
- 16: Ankerscheibe
- 17: Schrauben für Anker-Druckring-Verb.
- 18: axiale Ausnehmungen
- 19: radiale Ausnehmungen
- 20: Fühler
- 22: rechte Schrägfläche von Druckring 6
- 23: keilförmige Ringnut
- 24: linke Schrägfläche von Druckring 6
- 25: Rotor
- 26: E1ektromagnetspule
- 27: Spulenträger/Magnetgehäuse
- 28: Befestigungschraube

- A: Luftspalt
- B: Zentrale Welle

- 51: Nabe
- 51a: ringförmige Verstärkung
- 51b: Druckfläche
- 51c: radial gerichtete Verzahnung
- 52: Druckflansch
- 52a: axial gerichtete Verzahnung
- 53: Druckscheibe
- 53a: V-förmige Ringnut
- 54: Ringkolben
- 55: Statorteil
- 56: Dichthaube
- 57: Rillenkugellager
- 58: Rillenkugellager
- 59: Rillenkugellager
- 60: Sicherungsring
- 61: Sicherungsring
- 62: Sprengring
- 63: Dichtungsring
- 64: Dichtungsring
- 65: Drehmoment- übertragungskörper
- 66: Näherungsinitiator (Sensor)
- 67: Tellerfedern
- 68: Anschluß für hydraulischen oder pneumatischen Druck

## Patentansprüche

1. Spielfreie Überlastkupplung mit je einem treibenden und einem angetriebenen Kupplungskörper (15 bzw. 5), die um die gleiche Achse drehbar angeordnet sind und die miteinander in drehmomentübertragender Weise verbunden sind durch Drehmomentübertragungskörper (11), die in Richtung der axial, radial oder kegelig zwischen den Kupplungskörpern verlaufenden Trennebene von einer Federanordnung (7, 8, 12) eingedrückt werden in einander gegenüberstehende Ausnehmungen (18, 19) in den zwei Kupplungskörpern (15 bzw. 5), dadurch gekennzeichnet, daß ein der Kraft der Federanordnung (7, 8, 12) entgegenwirkender stationärer Magnet (14; 26) vorgesehen ist, der nach dem Ausrasten der Kupplung die Drehmoment übertragungs körper (11) entgegen der Federkraft wenigstens aus einer der Ausnehmungen (18 bzw. 19) heraushält.

2. Überlastkupplung nach Anspruch 1, dadurch gekennzeichnet, daß der im Magnetgehäuse (13; 27) angeordnete Magnet ein Permanentmagnet ist.

3. Überlastkupplung nach Anspruch 2, dadurch gekennzeichnet, daß ein zusätzlicher Elektromagnet (14, 26) vorgesehen ist, der im bestromten Zustand die Magnetwirkung des Permanentmagneten aufhebt.

4. Überlastkupplung nach Anspruch 1, dadurch gekennzeichnet, daß der Magnet ein Elektromagnet (14 bzw. 26) ist, der mindestens im ausgerasteten Zustand der Kupplung mit Strom versorgt wird.

5. Überlastkupplung nach Anspruch 4, dadurch gekennzeichnet, daß der Elektromagnet aufgrund der von einem Fühler (20) abgefühlten Ausrastung der Überlastkupplung mit Strom versorgt wird.

6. Überlastkupplung nach Anspruch 1, 2 oder 4, dadurch gekennzeichnet, daß die Federanordnung (7, 12) über einen Druckring (6) auf die Drehmomentübertragungskörper (11) einwirkt und der Druckring (6) mit einer mit dem Magneten zusammenwirkenden Ankerscheibe (16) verbunden ist.

7. Überlastkupplung nach Anspruch 6, dadurch gekennzeichnet, daß axial zwischen der Ankerscheibe (16) und dem stationären Magneten (13, 14; 26) ein Rotor (25) angeordnet ist, der mit der Welle (B) verbunden ist.

8. Überlastkupplung nach Anspruch 6 oder 7, dadurch gekennzeichnet, daß die Ankerscheibe (16) am Druckring befestigt ist und sich radial einwärts in Richtung auf die zentrale Welle (B) erstreckt.

9. Überlastkupplung nach einem der voranstehenden Ansprüche, dadurch gekennzeichnet, daß der Druckring (6) die Drehmomentübertragungskörper (11) mittels einer keilförmigen Ringnut (23) beiderseits ihrer radial außenliegenden Umfangsflächen teilweise umfaßt (Fig. 5), so daß die Körper (11) axial sowohl in Richtung der Federdruckbeaufschlagung als auch entgegengesetzt dazu vom Druckring (6) beaufschlagbar sind.

## Claims

1. Play-free overload clutch having one driving and one driven clutch body (15 and 5), which are disposed rotatably about the same axis and are connected to one another in a torque-transmitting manner by torque transmission bodies (11), which are pressed in the direction of the parting plane, which extends axially, radially or conically between the clutch bodies, by a spring arrangement (7, 8, 12) into opposing recesses (18, 19) in the two clutch bodies (15 and 5), characterized in that a stationary magnet (14; 26) is provided, which counteracts the force of the spring arrangement (7, 8, 12) and, after disengagement of the clutch, holds the torque transmission bodies (11) counter to the spring force at least out of one of the recesses (18 or 19).

2. Overload clutch according to claim 1, characterized in that the magnet disposed in the magnet housing (13; 27) is a permanent magnet.

3. Overload clutch according to claim 2, characterized in that an additional electromagnet (14, 26) is provided, which in the energized state cancels out the magnetic effect of the permanent magnet.

4. Overload clutch according to claim 1, characterized in that the magnet is an electromagnet (14 or 26) which, at least in the disengaged state of the clutch, is energized.

5. Overload clutch according to claim 4, characterized in that the electromagnet is energized on the basis of the disengagement of the overload clutch which is detected by a sensor (20).

6. Overload clutch according to claim 1, 2 or 4, characterized in that the spring arrangement (7, 12) acts via a thrust collar (6) upon the torque transmission bodies (11) and the thrust collar (6) is connected to an armature disc (16), which cooperates with the magnet.

7. Overload clutch according to claim 6, characterized in that disposed axially between the armature disc (16) and the stationary magnet (13, 14; 26) is a rotor (25) which is connected to the shaft (B).

8. Overload clutch according to claim 6 or 7, characterized in that the armature disc (16) is fastened to the thrust collar (6) and extends radially inwards in the direction of the central shaft (B).

9. Overload clutch according to one of the preceding claims, characterized in that the thrust collar (6) partially embraces the torque transmission bodies (11) by means of a wedge-shaped annular groove (23) on both sides of their radially outer-lying peripheral surfaces (Fig.5), so that the bodies (11) may be acted upon by the thrust collar (6) axially both in the direction of the spring loading and in the opposite direction thereto.

## Revendications

1. Accouplement à surcharge sans jeu comportant un corps d'accouplement menant et un corps d'accouplement mené (15 ; 5) qui sont agencés en rotation autour du même axe et qui sont reliés l'un à l'autre de manière à transmettre le couple de rotation par des corps de transmission du couple de rotation (11), qui sont enfoncés en direction du plan de séparation s'étendant axialement, radialement ou coniquement entre les corps d'accouplement, par un agencement à ressort (7, 8, 12) dans des évidements situés en vis-à-vis (18, 19) dans les deux corps d'accouplement (15 ; 5), caractérisé en ce qu'il est prévu un aimant stationnaire (14 ; 26) agissant à l'encontre de la force de l'agencement à ressort (7, 8, 12), qui maintient, après le déclenchement de l'accouplement, les corps de transmission du couple de rotation (11) à l'encontre de la force du ressort au moins hors de l'un des évidements (18 ou 19).

2. Accouplement à surcharge selon la revendication 1, caractérisé en ce que l'aimant agencé dans le boîtier d'aimant (13 ; 27) est un aimant permanent.

3. Accouplement à surcharge selon la revendication 2, caractérisé en ce qu'il est prévu un électroaimant supplémentaire (14, 26) qui annule, lorsqu'il est mis sous courant, l'effet magnétique de l'aimant permanent.

4. Accouplement à surcharge selon la revendication 1, caractérisé en ce que l'aimant est un électroaimant (14 ou 26) qui est alimenté en courant au moins à l'état déclenché de l'accouplement.

5. Accouplement à surcharge selon la revendication 4, caractérisé en ce que l'électroaimant est alimenté en courant en raison du déclenchement de l'accouplement à surcharge, qui est détecté par un détecteur (20).

6. Accouplement à surcharge selon l'une quelconque des revendications 1, 2 et 4, caractérisé en ce que l'agencement à ressort (7, 12) agit via une bague de pression (6) sur les corps de transmission du couple de rotation (11), et en ce que la bague de pression (6) est reliée à un disque d'armature (16) coopérant avec l'aimant.

7. Accouplement à surcharge selon la revendication 6, caractérisé en ce qu'il est prévu axialement entre le disque d'armature (16) et l'aimant stationnaire (13, 14 ; 26) un rotor qui est relié à l'arbre (B).

8. Accouplement à surcharge selon l'une ou l'autre des revendications 6 et 7, caractérisé en ce que le disque d'armature (16) est fixé sur la bague de pression et s'étend radialement vers l'intérieur en direction de l'arbre central (B).

9. Accouplement à surcharge selon l'une quelconque des revendications précédentes, caractérisé en ce que la bague de pression (6) entoure partiellement les corps de transmission du couple de rotation (11) au moyen d'une gorge annulaire (23) en forme de coin des deux côtés de leurs surfaces périphériques situées radialement à l'extérieur (fig. 5), de sorte que les corps (11) peuvent être sollicités axialement tant en direction de sollicitation par la pression du ressort qu'en sens opposé à celle-ci par la bague de pression (6).
